# EUROPÄISCHE PATENTSCHRIFT

(11) **EP 3 846 961 B1**
(45) Veröffentlichungstag und Bekanntmachung des Hinweises auf die Patenterteilung: **02.11.2022**
(21) Anmeldenummer: 19765217.5
(22) Anmeldetag: 03.09.2019
(51) Int. Cl.: B23P 11/02, H05B 6/14, H05B 3/06, H05B 3/40

(54) **SCHRUMPFGERÄT UND VERFAHREN ZUM INDUKTIVEN AUFHEIZEN VON SCHRUMPFFUTTERN**
SHRINK-FIT DEVICE AND METHOD OF HEATING A SHRINK-FIT CHUCK BY INDUCTION
DISPOSITIF À AJUSTEMENT FRETTÉ ET PROCÉDÉ DE CHAUFFAGE PAR INDUCTION D'UN MANDRIN À AJUSTEMENT FRETTÉ

(30) Priorität: 07.09.2018 DE 102018121883
(43) Veröffentlichungstag der Anmeldung: 14.07.2021
(73) Patentinhaber: Helmut Diebold GmbH&Co. Goldring-Werkzeugfabrik, 72417 Jungingen (DE)
(72) Erfinder: DIEBOLD, Hermann, 72379 Hechingen (DE)
(74) Vertreter: Pfiz, Thomas
(86) Internationale Anmeldenummer: PCT/EP2019/073450
(87) Internationale Veröffentlichungsnummer: WO 2020/048970

(56) Entgegenhaltungen:
- WO-A1-00/59676
- DE-A1-102005 014 984
- DE-U1-202007 000 869
- EASTMAN M: "SHRINK-FIT TOOLHOLDING", 1. April 1997 (1997-04-01), CUTTING TOOL ENGINEERING, CTE PUBLICATIONS, NORTHFIELD, IL, US, PAGE(S) 1 - 05, XP002949467, ISSN: 0011-4189 Seite 5, Absatz 1; Abbildung 3

## Beschreibung

Die Erfindung betrifft ein Schrumpfgerät zum induktiven Aufheizen bzw. Erwärmen von Schrumpffuttern für Schaftwerkzeuge mit einem Aufnahmebereich zum Aufnehmen eines Schrumpffutters, einer den Aufnahmebereich bezüglich einer Spulenachse konzentrisch umschließenden Induktionsspulenanordnung und einer Messeinheit zur Temperaturkontrolle des Schrumpffutters. Die Erfindung betrifft weiter ein Verfahren zum induktiven Aufheizen von Schrumpffuttern.

Ein derartiges Schrumpfgerät ist aus der DE 10 2012 216 186 A1 bekannt. Dort ist eine die Oberflächentemperatur des Schrumpffutters berührungslos erfassende Temperatur-Messeinrichtung vorgesehen, die stationär in verhältnismäßig großer Entfernung am Schrumpfgerät positioniert sein kann. Zur Messung muss allerdings eine Induktionsspulen-Heizeinheit außer Eingriffsweite mit dem Schrumpffutter verfahren werden, so dass die Futteroberfläche durch den Sensor abtastbar ist. Eine Messung während des Heizvorgangs ist somit nicht möglich.

Ausgehend hiervon liegt der Erfindung die Aufgabe zugrunde, die im Stand der Technik bekannten Geräte und Verfahren weiter zu verbessern und einen zuverlässigen Schrumpfvorgang bei hoher Sicherheit und einfacher Handhabung zu gewährleisten.

Zur Lösung dieser Aufgabe wird die im Patentanspruch 1 bzw. 11 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine direkte Temperaturkontrolle beim Aufheizen zu ermöglichen. Dementsprechend wird erfindungsgemäß vorgeschlagen, dass die Induktionsspulenanordnung von einem in den Aufnahmebereich mündenden Messkanal durchsetzt ist, und dass die Messeinheit einen in den Messkanal eingreifenden bzw. eingesetzten und durch den Kanal hindurch messenden Temperatursensor zur Erfassung einer Manteltemperatur des Schrumpffutters aufweist. Damit wird die Möglichkeit zur direkte Temperaturkontrolle während des induktiven Heizens, also während der Energieeinbringung geschaffen. Das induktive Erwärmen erfolgt aufgrund der begrenzten Eindringtiefe von außen nach innen, so dass am Futtermantel die höchste Temperatur auftritt. Durch Erfassung der Manteltemperatur kann somit eine ungewollte Überhitzung des Werkzeughalters vermieden werden, ohne dass eine Voreinstellung der aktuellen Futterkonfiguration bzw. eine Bestimmung der Ausgangstemperatur erforderlich wäre. Damit kann ein Bediener das Gerät sorglos bedienen und muss sich keine Gedanken über eine mögliche Überhitzung machen. Selbst ein automatischer Aufheiz- bzw. Abschaltvorgang ist ohne Schwierigkeiten möglich.

Um die Messung weiter zu verbessern, ist es vorteilhaft, wenn der Messkanal radial zur Spulenachse verläuft.

In diesem Zusammenhang ist es auch vorteilhaft, wenn der Messkanal in einem axialen Zentralbereich der Induktionsspulenanordnung vorzugsweise mittig zwischen deren axialen Enden angeordnet ist.

Zur Realisierung eines Messfensters ist es von Vorteil, wenn die Induktionsspulenanordnung eine unter Freihaltung des Messkanals gewickelte Spulenwicklung aufweist.

Eine weitere Verbesserung sieht vor, dass der Messkanal einen Durchbruch durch ein Gehäuse der Induktionsspulenanordnung umfasst.

Um eine gleichbleibende zuverlässige Positionierung zu schaffen, ist es günstig, wenn der Temperatursensor mindestens teilweise in dem Messkanal angeordnet ist.

Zur Einhaltung konstanter Messbedingungen ist es besonders vorteilhaft, wenn der Temperatursensor zur berührungslosen Erfassung der Manteltemperatur ausgebildet ist.

In diesem Zusammenhang ist es günstig, wenn die Messeinheit als Pyrometer ausgebildet ist und einen auf den Aufnahmeraum ausgerichteten, von einem darin befindlichen Schrumpffutter emittierte Wärmestrahlung erfassenden Strahlungsdetektor als Temperatursensor aufweist.

Eine besonders vorteilhafte Ausgestaltung sieht vor, dass in den Messkanal ein für Wärmestrahlung durchlässiges, vorzugsweise auswechselbares Schutzfenster insbesondere zum Schutz des Temperatursensors vor Verunreinigungen eingesetzt ist.

Um die Handhabung weiter zu vereinfachen, ist es besonders vorteilhaft, wenn eine die Messeinheit umfassende, die Stromzufuhr zu der Induktionsspulenanordnung nach Maßgabe der Manteltemperatur beeinflussende Einrichtung zur Heizkontrolle des Schrumpffutters beim Aufheizen vorgesehen ist.

In verfahrensmäßiger Hinsicht wird die eingangs genannte Aufgabe dadurch gelöst, dass eine Manteltemperatur des Schrumpffutters über einen die Induktionsspulenanordnung durchsetzenden Messkanal erfasst wird. Damit lassen sich die vorstehend bereits für die Vorrichtung erläuterten Vorteile analog erreichen.

Um eine Überhitzung zu vermeiden oder die Temperatur zu regeln, ist es von Vorteil, wenn die Stromzufuhr zu der Induktionsspulenanordnung in Abhängigkeit von der Manteltemperatur beeinflusst wird.

Um die gewünschte Temperatur zu halten und dadurch auch die Handhabungszeit für das Einsetzen bzw. Entnehmen des Werkzeugs zu verlängern, ist es vorteilhaft, wenn die Manteltemperatur durch Kontrolle der Stromzufuhr zu der Induktionsspulenanordnung auf einen vorgegebenen Sollwert gebracht und gegebenenfalls auf diesem Sollwert gehalten wird.

Ein einfacher Überhitzungsschutz lässt sich dadurch realisieren, dass die Stromzufuhr zu der Induktionsspulenanordnung bei Erreichen eines vorgegebenen Sollwerts der Manteltemperatur aufrechterhalten oder reduziert oder abgeschaltet wird.

Um die Heizenergie gezielt und definiert einzubringen, ist es günstig, wenn das Schrumpffutter durch einen Anschlag relativ zu dem Temperatursensor positioniert wird. Durch eine den Anschlag bildende, ggf. auswechselbare Polscheibe der Induktionsspulenanordnung können zugleich unerwünschte Streufelder minimiert werden.

Eine weitere Verbesserung ergibt sich dadurch, dass die gemessene Manteltemperatur über eine Anzeige der Messeinheit für einen Bediener angezeigt wird.

Eine besonders anschauliche Darstellung lässt sich dadurch erreichen, dass die Manteltemperatur mittels Leuchtdioden vorzugsweise farblich nach Art einer Ampel visualisiert wird.

Vorteilhafterweise wird die Manteltemperatur während des induktiven Erwärmens und/oder in einem Zeitintervall kurz danach gemessen wird.

Im Folgenden wird die Erfindung anhand der in der Zeichnung schematisch dargestellten Ausführungsbeispiele näher erläutert. Es zeigen:
- Fig. 1: ein Schrumpfgerät mit integrierter Heizkontrolle für ein zu erwär-mendes Schrumpffutter im Axialschnitt;
- Fig. 2: eine Induktionsspulenanordnung des Schrumpfgeräts mit Querdurchbruch als Messkanal in perspektivischer Darstellung;
- Fig. 3: einen Radialschnitt im Bereich des Messkanals durch die Induktionsspulenanordnung nach Fig. 2.

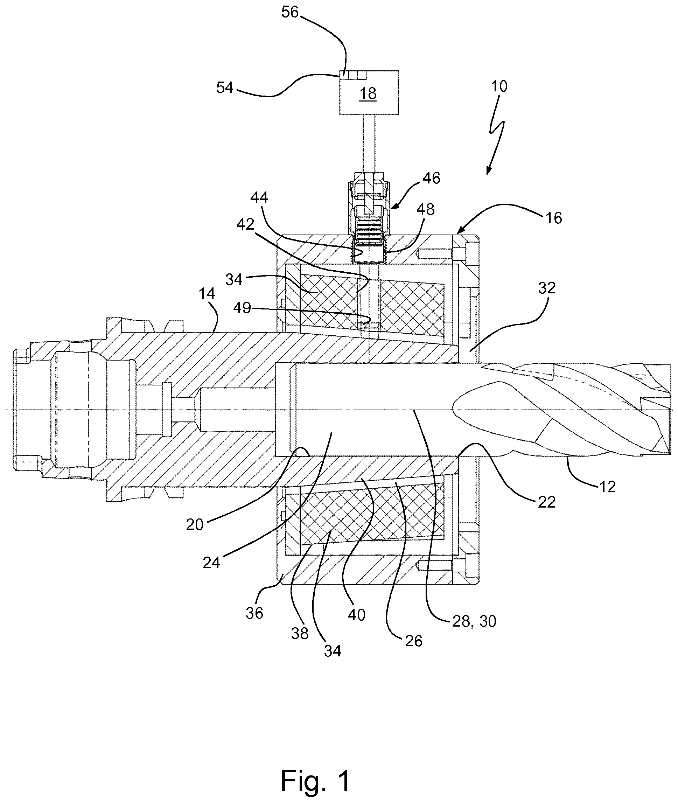

Das in Fig. 1 gezeigte Schrumpfgerät 10 dient zum Ein- bzw. Ausschrumpfen eines Schaftwerkzeuge 12 in ein Schrumpffutter 14. Es umfasst für diesen Zweck eine Induktionsspulenanordnung 16 zum induktiven Aufheizen des Schrumpffutters 14 und eine nur symbolisch dargestellte Kontrolleinheit 18 zur Heizkontrolle des Schrumpffutters 14.

Das Schrumpffutter 14 umfasst als Hülsenpartie einen zylindrisch hohlen Spannbereich 20, der über eine Stirnöffnung 22 am vorderen Stirnende des Schrumpffutters 14 zum Einführen des Werkzeugschafts 24 zugänglich ist. Der Spannbereich 20 besitzt einen etwas geringeren Nenndurchmesser als der Werkzeugschaft 24, so dass dieser in an sich bekannter Weise durch (induktives) Erwärmen des Schrumpffutters 14 klemmend einspannbar ist. Im eingeschrumpften Zustand wird der Werkzeugschaft 24 zur Übertragung eines Drehmoments auf den vorderen Arbeitsabschnitt des Rotationswerkzeugs 12 reibschlüssig im Presssitz drehfest gehalten. Zum Ausschrumpfen wird ebenfalls nur das Schrumpffutter 14 einseitig erwärmt, bis die thermische Ausdehnung den Werkzeugschaft 24 wieder zur Entnahme freigibt.

Die Induktionsspulenanordnung 16 umschließt einen Aufnahmebereich 26 für das Schrumpffutter 14 in konzentrischer Anordnung bezüglich der Spulenachse 28 bzw. Werkzeugachse 30. Durch eine axiale Relativbewegung zur Induktionsspulenanordnung 16 wird das Schrumpffutter 14 in die gezeigte Aufheizposition gebracht. Dabei kann das Schrumpffutter 14 durch eine als Anschlag wirkende Polscheibe 32 axial positioniert werden.

Um ein elektromagnetisches Wechselfeld zu erzeugen, enthält die Induktionsspulenanordnung 16 eine symbolisch schraffiert dargestellte Spulenwicklung 34 in einem Spulengehäuse 36. Die Spulenwicklung 34 ist in einer Vergussmasse 38 eingeschlossen, wobei der innere Hohlraum an den konischen Verlauf des Mantels 40 des Schrumpffutters 14 angepasst ist.

Um die Manteltemperatur des Schrumpffutters 14 beim Aufheizen erfassen zu können, ist die Induktionsspulenanordnung 16 von einem in den Aufnahmebereich 26 mündenden Messkanal 42 radial bezüglich der Spulenachse durchsetzt. Dabei ist der Messkanal 42 in einem axialen Zentralbereich der Induktionsspulenanordnung 16 zweckmäßig mittig zwischen deren axialen Enden angeordnet, wobei die Spulenwicklung 34 unter Freihaltung des Messkanals 42 um diesen herumgewickelt ist. Der spulenseitige innere Abschnitt des Messkanals 42 fluchtet mit einem Durchbruch 44 in der Außenwand 38 des Spulengehäuses 36.

Die Kontrolleinheit 18 ist eingangsseitig mit einer Messeinheit 46 zur Erfassung einer Manteltemperatur des Schrumpffutters 14 gekoppelt. Zu diesem Zweck ist die Messeinheit 46 als Pyrometer zur berührungslosen Temperaturerfassung ausgebildet.

Die in an sich bekannter Weise pyrometrisch arbeitende Messeinheit 46 besitzt einen Strahlungsdetektor als Temperatursensor 48, der in den Durchbruch 44 eingesetzt ist und der durch den Messkanal 42 in der Spulenwicklung 34 hindurch von dem Schrumpffutter 14 emittierte Wärmestrahlung erfasst. Dadurch kann während des Erwärmens des Schrumpffutters 14 eine Temperaturkontrolle erfolgen und ggf. die Stromzufuhr zu der Induktionsspulenanordnung 16 in Abhängigkeit von der Manteltemperatur beeinflusst werden. Zum Schutz des Temperatursensors 48 vor Verunreinigungen ist ein für Wärmestrahlung durchlässiges Schutzfenster 49 in den Messkanal 42 eingesetzt.

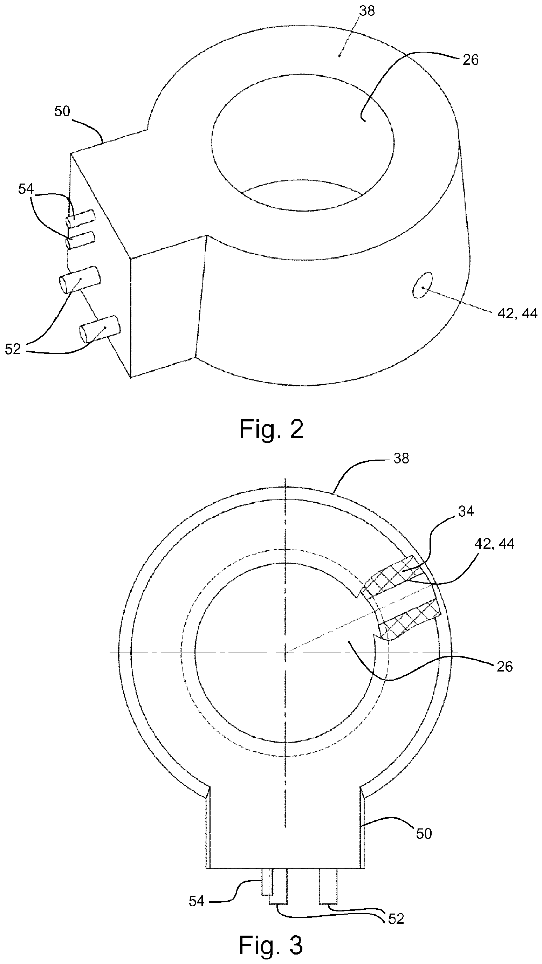

Wie aus Fig. 2 und 3 ersichtlich, besitzt die eingegossene Spulenwicklung 34 einen Fortsatz 50, an dem die Stromanschlüsse 52 für die Stromversorgung zugänglich sind. Über zusätzliche Messanschlüsse 54 ist eine Temperaturkontrolle der Spulenwicklung 34 auf Basis eines nicht gezeigten PTC-Fühlers möglich.

Im Betrieb des Schrumpfgeräts 10 kann die ausgangsseitig an die Stromanschlüsse 52 der Induktionsspulenanordnung 16 angeschlossene Kontrolleinheit 18 die Manteltemperatur durch Kontrolle der Stromzufuhr auf einen vorgegebenen Sollwert bringen und gegebenenfalls auf diesem Sollwert halten. Die Kontrolleinheit 18 kann dabei als Regeleinrichtung in einem geschlossenen Regelkreis wirken. In einer vereinfachten Betriebsweise ist es auch denkbar, die Stromzufuhr zu der Induktionsspulenanordnung 16 bei Erreichen eines vorgegebenen Sollwerts der Manteltemperatur reduziert oder abgeschaltet wird.

Die gemessene Manteltemperatur kann über eine Anzeige 54 Kontrolleinheit 18 für einen Bediener angezeigt werden. Besonders anschaulich kann dies dadurch erfolgen, die Manteltemperatur mittels Leuchtdioden 56 farblich nach Art einer Ampel visualisiert wird.

## Patentansprüche

1. Schrumpfgerät zum induktiven Aufheizen von Schrumpffuttern (14) für Schaftwerkzeuge (12) mit einem Aufnahmebereich (26) zum Aufnehmen eines Schrumpffutters (14), einer den Aufnahmebereich (26) bezüglich einer Spulenachse (28) konzentrisch umschließenden Induktionsspulenanordnung (16) und einer Messeinheit (46) zur Temperaturkontrolle des Schrumpffutters (14), **dadurch gekennzeichnet, dass** die Induktionsspulenanordnung (16) von einem quer zur Spulenachse (28) durch die Induktionsspulenanordnung (16) hindurch verlaufenden, in den Aufnahmebereich (26) mündenden Messkanal (42) durchsetzt ist, und dass die Messeinheit (46) einen in den Messkanal (42) eingreifenden und durch diesen hindurch messenden Temperatursensor (48) zur Erfassung einer Manteltemperatur des Schrumpffutters (14) aufweist.

2. Schrumpfgerät nach Anspruch 1, **dadurch gekennzeichnet, dass** der Messkanal (42) radial zur Spulenachse (28) verläuft.

3. Schrumpfgerät nach Anspruch 1 oder 2, **dadurch gekennzeichnet, dass** der Messkanal (42) in einem axialen Zentralbereich der Induktionsspulenanordnung (16) vorzugsweise mittig zwischen deren axialen Enden angeordnet ist.

4. Schrumpfgerät nach einem der Ansprüche 1 bis 3, **dadurch gekennzeichnet, dass** die Induktionsspulenanordnung (16) eine unter Freihaltung des Messkanals (42) gewickelte Spulenwicklung (34) aufweist.

5. Schrumpfgerät nach einem der Ansprüche 1 bis 4, **dadurch gekennzeichnet, dass** der Messkanal (42) einen Durchbruch (44) durch ein Gehäuse (36) der Induktionsspulenanordnung (16) umfasst.

6. Schrumpfgerät nach einem der Ansprüche 1 bis 5, **dadurch gekennzeichnet, dass** der Temperatursensor (48) mindestens teilweise in dem Messkanal (42) angeordnet ist.

7. Schrumpfgerät nach einem der Ansprüche 1 bis 6, **dadurch gekennzeichnet, dass** der Temperatursensor (48) zur berührungslosen Erfassung der Manteltemperatur ausgebildet ist.

8. Schrumpfgerät nach einem der Ansprüche 1 bis 7, **dadurch gekennzeichnet, dass** die Messeinheit (46) als Pyrometer ausgebildet ist und einen auf den Aufnahmebereich ausgerichteten, von einem darin befindlichen Schrumpffutter (14) emittierte Wärmestrahlung erfassenden Strahlungsdetektor als Temperatursensor (48) aufweist.

9. Schrumpfgerät nach einem der Ansprüche 1 bis 8, **dadurch gekennzeichnet, dass** in den Messkanal (42) ein für Wärmestrahlung durchlässiges, vorzugsweise auswechselbares Schutzfenster (49) insbesondere zum Schutz des Temperatursensors (48) vor Verunreinigungen eingesetzt ist.

10. Schrumpfgerät nach einem der Ansprüche 1 bis 9, **gekennzeichnet durch** eine die Messeinheit (46) umfassende, die Stromzufuhr zu der Induktionsspulenanordnung (16) nach Maßgabe der Manteltemperatur beeinflussende Einrichtung (18) zur Heizkontrolle des Schrumpffutters (14) beim Aufheizen.

11. Verfahren zum induktiven Aufheizen von Schrumpffuttern (14) in einem Schrumpfgerät (10), bei welchem ein Schrumpffutter (14) in einem von einer Induktionsspulenanordnung (16) konzentrisch umschlossenen Aufnahmebereich (26) induktiv erwärmt und dadurch aufgeweitet wird, und bei welchem mittels einer Messeinheit (46) die Temperatur des Schrumpffutters (14) kontrolliert wird, **dadurch gekennzeichnet, dass** eine Manteltemperatur des Schrumpffutters (14) über einen die Induktionsspulenanordnung (16) quer zur Spulenachse (28) durchsetzenden Messkanal (42) mittels eines in den Messkanal (42) eingreifenden und durch diesen hindurch messenden Temperatursensors (48) der Messeinheit (46) erfasst wird.

12. Verfahren nach Anspruch 11, **dadurch gekennzeichnet, dass** die Stromzufuhr zu der Induktionsspulenanordnung (16) in Abhängigkeit von der Manteltemperatur beeinflusst wird.

13. Verfahren nach Anspruch 11 oder 12, **dadurch gekennzeichnet, dass** die Manteltemperatur durch Kontrolle der Stromzufuhr zu der Induktionsspulenanordnung (16) auf einen vorgegebenen Sollwert gebracht und gegebenenfalls auf diesem Sollwert gehalten wird.

14. Verfahren nach einem der Ansprüche 11 bis 13, **dadurch gekennzeichnet, dass** die Stromzufuhr zu der Induktionsspulenanordnung (16) bei Erreichen eines vorgegebenen Sollwerts der Manteltemperatur aufrechterhalten oder reduziert oder abgeschaltet wird.

15. Verfahren nach einem der Ansprüche 11 bis 14, **dadurch gekennzeichnet, dass** die gemessene Manteltemperatur über eine Anzeige (54) der Messeinheit (46) für einen Bediener angezeigt wird.

## Claims

1. Shrink-fit device for inductively heating shrink-fit chucks (14) for shank tools (12), having an accommodating region (26) for accommodating a shrink-fit chuck (14), an induction coil arrangement (16) which surrounds the accommodating region (26) concentrically with respect to a coil axis (28), and a measuring unit (46) for controlling the temperature of the shrink-fit chuck (14), **characterized in that** a measuring channel (42), which extends through the induction coil arrangement (16) transversely to the coil axis (28) and opens into the accommodating region (26), passes through the induction coil arrangement (16), and **in that** the measuring unit (46) has a temperature sensor (48), which engages in the measuring channel (42) and measures through said channel, for detecting a casing temperature of the shrink-fit chuck (14).

2. Shrink-fit device according to claim 1, **characterized in that** the measuring channel (42) extends radially to the coil axis (28).

3. Shrink-fit device according to either claim 1 or claim 2, **characterized in that** the measuring channel (42) is arranged in an axial central region of the induction coil arrangement (16), preferably centrally between the ends thereof.

4. Shrink-fit device according to any of claims 1 to 3, **characterized in that** the induction coil arrangement (16) has a coil winding (34) which is wound while keeping the measuring channel (42) free.

5. Shrink-fit device according to any of claims 1 to 4, **characterized in that** the measuring channel (42) comprises an opening (44) through a housing (36) of the induction coil arrangement (16).

6. Shrink-fit device according to any of claims 1 to 5, **characterized in that** the temperature sensor (48) is arranged at least in part in the measuring channel (42).

7. Shrink-fit device according to any of claims 1 to 6, **characterized in that** the temperature sensor (48) is designed for contactless detection of the casing temperature.

8. Shrink-fit device according to any of claims 1 to 7, **characterized in that** the measuring unit (46) is designed as a pyrometer and has a radiation detector as a temperature sensor (48) which is aligned with the accommodating region and which detects thermal radiation emitted by a shrink-fit chuck (14) located therein.

9. Shrink-fit device according to any of claims 1 to 8, **characterized in that** a protective window (49) which is permeable to thermal radiation and is preferably replaceable is inserted into the measuring channel (42) in particular to protect the temperature sensor (48) from contamination.

10. Shrink-fit device according to any of claims 1 to 9, **characterized by** a device (18) for controlling the heating of the shrink-fit chuck (14) during heating, which device comprises the measuring unit (46) and influences the power supply to the induction coil arrangement (16) in accordance with the casing temperature.

11. Method for inductively heating shrink-fit chucks (14) in a shrink-fit device (10), in which method a shrink-fit chuck (14) is inductively heated in an accommodating region (26) concentrically surrounded by an induction coil arrangement (16) and is thus expanded, and in which method the temperature of the shrink-fit chuck (14) is controlled by a measuring unit (46), **characterized in that** a casing temperature of the shrink-fit chuck (14) is detected via a measuring channel (42) which passes through the induction coil arrangement (16) transversely to the coil axis (28) by means of a temperature sensor (48) of the measuring unit (46) which engages in the measuring channel (42) and measures through said channel.

12. Method according to claim 11, **characterized in that** the power supply to the induction coil arrangement (16) is influenced depending on the casing temperature.

13. Method according to either claim 11 or claim 12, **characterized in that** the casing temperature is brought to a predetermined target value by controlling the power supply to the induction coil arrangement (16) and is optionally kept at this target value.

14. Method according to any of claims 11 to 13, **characterized in that** the power supply to the induction coil arrangement (16) is maintained or reduced or switched off when a predetermined target value of the casing temperature is reached.

15. Method according to any of claims 11 to 14, **characterized in that** the measured casing temperature is displayed for an operator via a display (54) of the measuring unit (46).

## Revendications

1. Appareil de frettage permettant le chauffage par induction de mandrins de frettage (14) pour des outils à tige (12), comportant une zone de réception (26) permettant la réception d'un mandrin de frettage (14), un agencement de bobines d'induction (16) entourant concentriquement la zone de réception (26) par rapport à un axe de bobine (28) et une unité de mesure (46) permettant la régulation de la température du mandrin de frettage (14), **caractérisé en ce que** l'agencement de bobines d'induction (16) est traversé par un canal de mesure (42) s'étendant transversalement à l'axe de bobine (28) à travers l'agencement de bobines d'induction (16) et débouchant dans la zone de réception (26), et **en ce que** l'unité de mesure (46) présente un capteur de température (48) permettant la détection d'une température d'enveloppe du mandrin de frettage (14), lequel capteur de température venant en prise dans le canal de mesure (42) et prenant des mesures à travers celui-ci.

2. Appareil de frettage selon la revendication 1, **caractérisé en ce que** le canal de mesure (42) s'étend radialement par rapport à l'axe de bobine (28).

3. Appareil de frettage selon la revendication 1 ou 2, **caractérisé en ce que** le canal de mesure (42) est disposé dans une zone centrale axiale de l'agencement de bobines d'induction (16), de préférence au centre entre ses extrémités axiales.

4. Appareil de frettage selon l'une des revendications 1 à 3, **caractérisé en ce que** l'agencement de bobines d'induction (16) présente un enroulement de bobine (34) enroulé en maintenant le canal de mesure (42) libre.

5. Appareil de frettage selon l'une des revendications 1 à 4, **caractérisé en ce que** le canal de mesure (42) comprend une ouverture (44) à travers un boîtier (36) de l'agencement de bobines d'induction (16).

6. Appareil de frettage selon l'une des revendications 1 à 5, **caractérisé en ce que** le capteur de température (48) est disposé au moins partiellement dans le canal de mesure (42).

7. Appareil de frettage selon l'une des revendications 1 à 6, **caractérisé en ce que** le capteur de température (48) est configuré pour la détection sans contact de la température d'enveloppe.

8. Appareil de frettage selon l'une des revendications 1 à 7, **caractérisé en ce que** l'unité de mesure (46) est réalisée sous la forme d'un pyromètre et présente un détecteur de rayonnement aligné avec la zone de réception et détectant le rayonnement thermique émis par un mandrin de frettage (14) situé à l'intérieur de celle-ci en tant que capteur de température (48).

9. Appareil de frettage selon l'une des revendications 1 à 8, **caractérisé en ce qu'**une fenêtre de protection (49) perméable au rayonnement thermique, de préférence remplaçable, est insérée dans le canal de mesure (42), en particulier pour protéger le capteur de température (48) des impuretés.

10. Appareil de frettage selon l'une des revendications 1 à 9, **caractérisé par** un dispositif (18), lequel comprend l'unité de mesure (46), influence l'alimentation électrique de l'agencement de bobines d'induction (16) en fonction de la température d'enveloppe et permet la régulation du chauffage du mandrin de frettage (14) pendant le chauffage.

11. Procédé permettant le chauffage par induction de mandrins de frettage (14) dans un appareil de frettage (10), dans lequel un mandrin de frettage (14) est chauffé par induction dans une zone de réception (26) entourée concentriquement par un agencement de bobines d'induction (16) et est ainsi élargi, et dans lequel la température du mandrin de frettage (14) est régulée au moyen d'une unité de mesure (46), **caractérisé en ce qu'**une température d'enveloppe du mandrin de frettage (14) est détectée par l'intermédiaire d'un canal de mesure (42) traversant l'agencement de bobines d'induction (16) transversalement à l'axe de bobine (28) au moyen d'un capteur de température (48) de l'unité de mesure (46) venant en prise dans le canal de mesure (42) et prenant des mesures à travers celui-ci.

12. Procédé selon la revendication 11, **caractérisé en ce que** l'alimentation électrique de l'agencement de bobines d'induction (16) est influencée en fonction de la température d'enveloppe.

13. Procédé selon la revendication 11 ou 12, **caractérisé en ce que** la température d'enveloppe est amenée à une valeur cible prédéterminée par régulation de l'alimentation électrique de l'agencement de bobines d'induction (16) et est éventuellement maintenue à ladite valeur cible.

14. Procédé selon l'une des revendications 11 à 13, **caractérisé en ce que** l'alimentation électrique de l'agencement de bobines d'induction (16) est maintenue ou réduite ou coupée lorsqu'une valeur cible prédéterminée de la température d'enveloppe est atteinte.

15. Procédé selon l'une des revendications 11 à 14, **caractérisé en ce que** la température d'enveloppe mesurée est affichée à un utilisateur par l'intermédiaire d'un moyen d'affichage (54) de l'unité de mesure (46).
